# EUROPÄISCHE PATENTANMELDUNG

(11) **EP 0 687 893 A2**
(43) Veröffentlichungstag der Anmeldung: **20.12.1995**
(21) Anmeldenummer: 95115179.4
(22) Anmeldetag: 14.07.1992
(51) Int. Cl.: G01F 1/84

(54) **Massendurchflussmessgerät**

(30) Priorität: 22.07.1991 DE 4124295
(62) Teilanmeldung aus: 92111973.1
(71) Anmelder: Krohne AG, CH-4019 Basel (CH)
(72) Erfinder: Hussain, Yousif A., Dipl.-Ing., Coulsdon, Surrey, CR 5 2 SE (GB); Rolph, Chris N., Dipl.-Ing., Redhill, Surrey, RH 1 4 DE (GB)
(74) Vertreter: Gesthuysen, von Rohr & Weidener

(57) **Zusammenfassung**

Dargestellt und beschrieben ist ein Massendurchflußmeßgerät für strömende Medien, das nach dem Coriolis-Prinzip arbeitet, mit mindestens einer das strömende Medium führenden, zumindest im wesentlichen geraden Coriolis-Rohrleitung (1), mit mindestens einem auf die Coriolis-Rohrleitung (1) einwirkenden Schwingungserzeuger (2) mit mindestens einem Coriolis-Kräfte und/oder auf Coriolis-Kräften beruhende Coriolis-Schwingungen erfassenden Meßwertaufnehmer (3) und mit einem Kompensationszylinder (6), wobei die Coriolis-Rohrleitung (1) innerhalb des Kompensationszylinders (6) angeordnet ist und die Coriolis-Rohrleitung (1) und der Kompensationszylinder (6) in einer axiale Relativbewegungen ausschließenden Weise miteinander verbunden sind.

Bei dem erfindungsgemäßen Massendurchflußmeßgerät führen Temperaturschwankungen nicht, jedenfalls aber in geringerem Maße, zu Meßfehlern und nicht zu mechanischen Schäden, und zwar dadurch, daß die Coriolis-Rohrleitung (1) und der Kompensationszylinder (6) aus Werkstoffen mit gleichen oder nahezu gleichen Wärmeausdehnungskoeffizienten bestehen.

## Beschreibung

Die Erfindung betrifft ein Massendurchflußmeßgerät für strömende Medien, das nach dem Coriolis-Prinzip arbeitet, mit mindestens einer das strömende Medium führenden, zumindest im wesentlichen geraden Coriolis-Leitung, mit mindestens einem auf die Coriolis-Leitung einwirkenden Schwingungserzeuger, mit mindestens einem Coriolis-Kräfte und/oder auf Coriolis-Kräften beruhende Coriolis-Schwingungen erfassenden Meßwertaufnehmer und mit einem Kompensationszylinder, wobei die Coriolis-Rohrleitung innerhalb des Kompensationszylinders angeordnet ist und die Coriolis-Rohrleitung und der Kompensationszylinder in einer axiale Relativbewegungen ausschließenden Weise miteinander verbunden sind.

Massendurchflußmeßgeräte für strömende Medien, die nach dem Coriolis-Prinzip arbeiten, sind in verschiedenen Ausführungen bekannt (vgl. z. B. die DE-OSen 26 29 833, 28 22 087, 28 33 037, 29 38 498, 30 07 361, 33 29 544, 34 43 234, 35 03 841, 35 05 166, 35 26 297, 36 32 800, 37 07 777, 38 24 111, 39 16 285 und 40 16 907, die EP-OSen 0 083 144, 0 109 218, 0 119 638, 0 196 150, 0 210 308, 0 212 782, 0 235 274, 0 239 679, 0 243 468, 0 244 692, 0 271 605, 0 275 367 und 0 282 552, die FR-OS 2 598 801, sowie die US-PSen 4,491,009, 4,628,744, 4,666,421, 4,803,867 und 4,962,671) und finden in zunehmendem Maße in der Praxis Verwendung.

Bei Massendurchflußmeßgeräten für strömende Medien, die nach dem Coriolis-Prinzip arbeiten, unterscheidet man grundsätzlich zwischen einerseits solchen, deren Coriolis-Rohrleitung zumindest im wesentlichen gerade ausgeführt ist, und andererseits solchen, deren Coriolis-Rohrleitung schleifenförmig ausgeführt ist. Außerdem unterscheidet man bei den in Rede stehenden Massendurchflußmeßgeräten zwischen einerseits solchen, die nur eine Coriolis-Rohrleitung aufweisen, und andererseits solchen, die zwei Coriolis-Rohrleitungen aufweisen; bei den Ausführungsformen mit zwei Coriolis-Rohrleitungen können diese strömungstechnisch in Reihe oder parallel zueinander liegen.

Ausführungsformen von Massendurchflußmeßgeräten, bei denen die Coriolis-Rohrleitung gerade ausgeführt ist bzw. die Coriolis-Rohrleitungen gerade ausgeführt sind, sind in bezug auf den mechanischen Aufbau einfach und folglich mit relativ geringen Kosten herzustellen. Dabei sind auch die Rohrleitungsinnenflächen gut bearbeitbar, z. B. polierbar. Im übrigen haben sie einen geringen Druckverlust. Nachteilig ist bei Massendurchflußmeßgeräten, die nach dem Coriolis-Prinzip arbeiten und bei denen die Coriolis-Rohrleitung gerade ausgeführt ist bzw. die Coriolis-Rohrleitungen gerade ausgeführt sind, daß sowohl thermisch bedingte Ausdehnungen bzw. thermisch bedingte Spannungen als auch von außen einwirkende Kräfte und Momente zu Meßfehlern und zu mechanischen Schäden, nämlich zu Spannungsrissen, führen können.

Der Erfindung liegt nun die Aufgabe zugrunde, daß eingangs beschriebene Massendurchflußmeßgerät, bei dem die Coriolis-Rohrleitung bzw. die Coriolis-Rohrleitungen zumindest im wesentlichen gerade ausgeführt ist bzw. sind (vgl. die DE-OSen 36 32 800 und 38 24 111), so auszugestalten und weiterzubilden, daß Temperaturschwankungen nicht, jedenfalls aber in geringerem Maße, zu Meßfehlern und nicht zu mechanischen Schäden führen.

Das erfindungsgemäße Massendurchflußmeßgerät, bei dem die zuvor hergeleitete und dargelegte Aufgabe gelöst ist, ist dadurch gekennzeichnet, daß die Coriolis-Rohrleitung und der Kompensationszylinder aus Werkstoffen mit gleichen oder nahezu gleichen Wärmeausdehnungskoeffizienten, vorzugsweise aus Werkstoffen mit relativ geringen Wärmeausdehnungskoeffizienten, bestehen. Die Baueinheit aus der Coriolis-Rohrleitung und dem Kompensationszylinder ist damit weitgehend "immun" gegen Temperaturschwankungen.

Im einzelnen gibt es nun eine Vielzahl von Möglichkeiten, das erfindungsgemäße Massendurchflußmeßgerät auszugestalten und weiterzubilden. Dazu wird verwiesen einerseits auf die dem Patentanspruch 1 nachgeordneten Patentansprüche, andererseits auf die Beschreibung von bevorzugten Ausführungsbeispielen in Verbindung mit der Zeichnung. In der Zeichnung zeigen
- Fig. 1: einen Längsschnitt durch ein erstes Ausführungsbeispiel eines erfindungsgemäßen Massendurchflußmeßgeräts,
- Fig. 2: einen vergrößerten Ausschnitt aus Fig. 1,
- Fig. 3: in gegenüber der Fig. 2 vergrößerter Darstellung, einen Schnitt durch das Massendurchflußmeßgerät nach den Fig. 1 und 2, entlang der Linie III - III,
- Fig. 4: einen der Fig. 3 entsprechenden Schnitt durch ein im übrigen nicht dargestelltes zweites Ausführungsbeispiel eines erfindungsgemäßen Massendurchflußmeßgeräts,
- Fig. 5: einen Längsschnitt durch einen Teil eines dritten Ausführungsbeispiels eines erfindungsgemäßen Massendurchflußmeßgeräts,
- Fig. 6: einen Längsschnitt durch einen Teil eines vierten Ausführungsbeispiels eines erfindungsgemäßen Massendurchflußmeßgeräts,
- Fig. 7: einen Längsschnitt durch ein fünftes Ausführungsbeispiel eines erfindungsgemäßen Massendurchflußmeßgeräts und
- Fig. 8: einen Längsschnitt durch ein sechstes Ausführungsbeispiel eines erfindungsgemäßen Massendurchflußmeßgeräts.

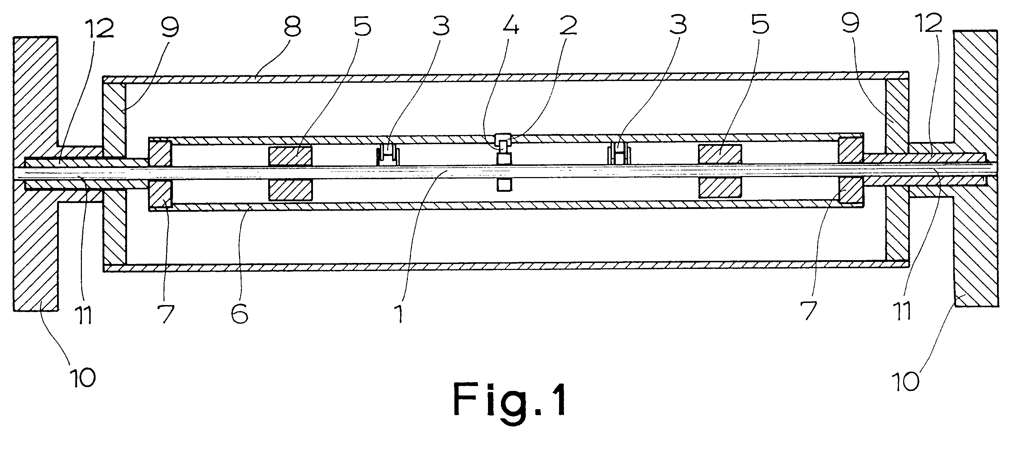

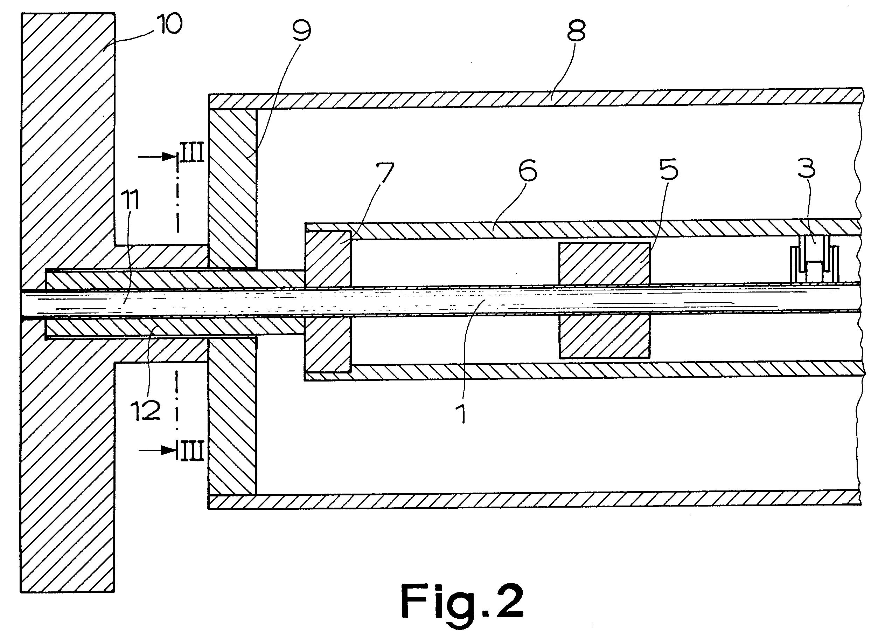

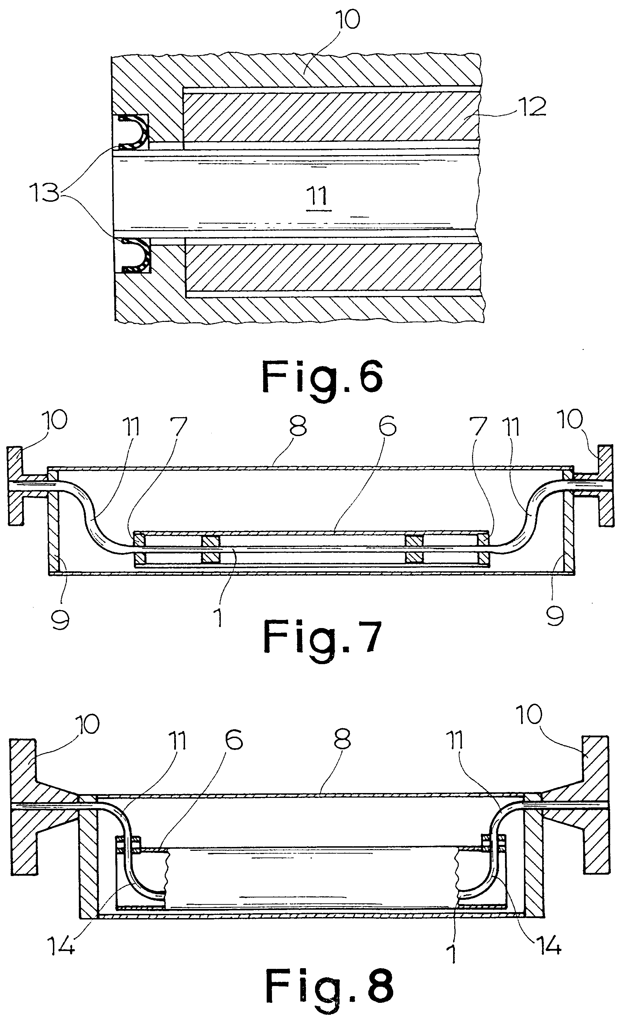

Bei dem erfindungsgemäßen Massendurchflußmeßgerät für strömende Medien handelt es sich um ein solches, das nach dem Coriolis-Prinzip arbeitet. Folglich gehören zu dem erfindungsgemäßen Massendurchflußmeßgerät eine das strömende Medium führende gerade Coriolis-Rohrleitung 1 (Fig. 1 bis 6) bzw. im wesentlichen gerade Coriolis-Rohrleitung 1 (Fig. 7 und 8), ein auf die Coriolis-Rohrleitung 1 einwirkender Schwingungserzeuger 2 und Zwei Coriolis-Kräfte und/oder auf Coriolis-Kräften beruhende Coriolis-Schwingungen erfassender Meßwertaufnehmer 3. In dem in Fig. 1 dargestellten Ausführungsbeispiel wirkt der Schwingungserzeuger 2 mit einem an der Coriolis-Rohrleitung 1 vorgesehenen Pendelarm 4 zusammen. In bezug auf die hier verwirklichte Maßnahme "Coriolis-Rohrleitung 1 mit Pendelarm 4" wird auf die DE-OS 40 23 989 verwiesen, deren Offenbarungsgehalt ausdrücklich auch hier zum Offenbarungsgehalt gemacht wird. Im übrigen zeigt die Fig. 1, daß die Coriolis-Rohrleitung 1 noch mit Massekörpern 5 versehen ist, durch deren Masse und Anordnung die Eigenfrequenz der Coriolis-Rohrleitung 1 - in bestimmten Grenzen - beeinflußt werden kann.

Wie die Figuren zeigen, ist bei allen dargestellten Ausführungsbeispielen ein Kompensationszylinder 6 vorgesehen und die Coriolis-Rohrleitung 1 innerhalb des Kompensationszylinders 6 angeordnet. Dabei sind die Coriolis-Rohrleitung 1 und der Kompensationszylinder 6 in einer axiale Relativbewegungen ausschließenden Weise miteinander verbunden, in allen dargestellten Ausführungsbeispielen über zwei endseitig an den Kompensationszylinder 6 angeschlossene Verbindungsringe 7. Die Verbindungsringe 7 können durch Schweissen oder durch Hartlöten mit dem Kompensationszylinder 6 verbunden sein; denkbar ist es auch, die Verbindungsringe endseitig in den Kompensationszylinder einzuschrauben. Vorzugsweise bestehen die Verbindungsringe 7 aus dem gleichen Werkstoff wie die Coriolis-Rohrleitung 1. Die Coriolis-Rohrleitung 1 ist durch Schweißen oder durch Hartlöten mit den Verbindungsringen 7 verbunden, vorzugsweise durch Vakuum-Hartlöten.

Im übrigen ist die Coriolis-Rohrleitung 1 mit Zug-Vorspannung innerhalb des Kompensationszylinders 6 angeordnet. Mit zunehmender Temperatur wird dann die Zug-Vorspannung abgebaut und die danach auftretende Druckspannung kann dadurch in zulässigen Grenzen gehalten werden.

Der Realisierung der Maßnahme "Anordnung der Coriolis-Rohrleitung 1 mit Zug-Vorspannung innerhalb des Kompensationszylinders 6" ist es dienlich, wenn besondere Werkstoffe für die Coriolis-Rohrleitung 1 und für den Kompensationszylinder 6 gewählt werden. Vorzugsweise besteht die Coriolis-Rohrleitung 1 aus einer Nickel-Legierung, insbesondere aus Hastelloy C 22, und der Kompensationszylinder 6 aus einer Nickel-Legierung, insbesondere aus Hastelloy C 4 oder aus unlegiertem Stahl AISI 1078.

Zuvor ist bereits darauf hingewiesen worden, daß die Coriolis-Rohrleitung 1 vorzugsweise durch Hartlöten mit den Verbindungsringen 7 verbunden wird. Dabei empfiehlt es sich, als Lötmaterial eine Nickel-Legierung mit einer Löttemperatur von ca. 1.000 °C zu verwenden.

Wird in der zuvor beschriebenen Weise und mit den zuvor beschriebenen Werkstoffen gearbeitet, dann wird die gewünschte Zug-Vorspannung der Coriolis-Rohrleitung 1 automatisch dadurch erreicht, daß sich die Coriolis-Rohrleitung 1 während des Lötens stärker ausdehnt als die übrigen Bauteile, so daß nach dem Abkühlen die gewünschte Zug-Vorspannung vorhanden ist, und zwar eine Zug-Vorspannung von ca. 80 bis 100 MPA.

Erfindungsgemäß ist zur "Immunisierung" der Coriolis-Rohrleitung 1 gegen Temperaturschwankungen vorgesehen, für die Coriolis-Rohrleitung 1 und den Kompensationszylinder 6 Werkstoffe mit gleichem oder nahezu gleichem Wärmeausdehnungskoeffizienten zu verwenden, insbesondere Werkstoffe mit relativ geringem Wärmeausdehnungskoeffizienten zu verwenden. Unter diesem Gesichtspunkt empfiehlt es sich, für die Coriolis-Rohrleitung 1 Titan oder eine Titanlegierung sowie für den Kompensationszylinder 6 unlegierten Stahl, ferritischen rostfreien Stahl oder eine Nickel-Legierung zu verwenden.

Eine weitere ergänzende Maßnahme zur "Immunisierung" der Coriolis-Rohrleitung 1 gegen Temperaturschwankungen und gegen von außen einwirkende Kräfte und Momente besteht darin, einen äußeren, vorzugsweise aus rostfreiem Stahl bestehenden Aufnahmezylinder 8 vorzusehen und die Baueinheit aus der Coriolis-Rohrleitung 1, dem Kompensationszylinder 6 und den Verbindungsringen 7 innerhalb des Aufnahmezylinders 8 anzuordnen. Diese Ausführungsform ist vorzugsweise dadurch ergänzend gekennzeichnet, daß der Aufnahmezylinder 8 zwei endseitig angeschlossene, vorzugsweise aus rostfreiem Stahl bestehende Verbindungsringe 9 aufweist, an die Verbindungsringe 9 jeweils ein nach außen ragender Anschlußflansch 10 angeschlossen ist und mit der Coriolis-Rohrleitung 1 verbundene Anschluß-Rohrleitungen 11 durch die Verbindungsringe 9 in die Anschlußflansche 10 ragen. Zweckmäßigerweise sind dabei die Coriolis-Rohrleitung 1 und die Anschluß-Rohrleitungen 11 einstückig ausgeführt; es handelt sich also vorzugsweise um eine insgesamt durchgehende Rohrleitung.

Im übrigen empfiehlt es sich, zum Schutz der Anschluß-Rohrleitungen 11 diese jeweils mit einem Verstärkungszylinder 12 zu ummanteln.

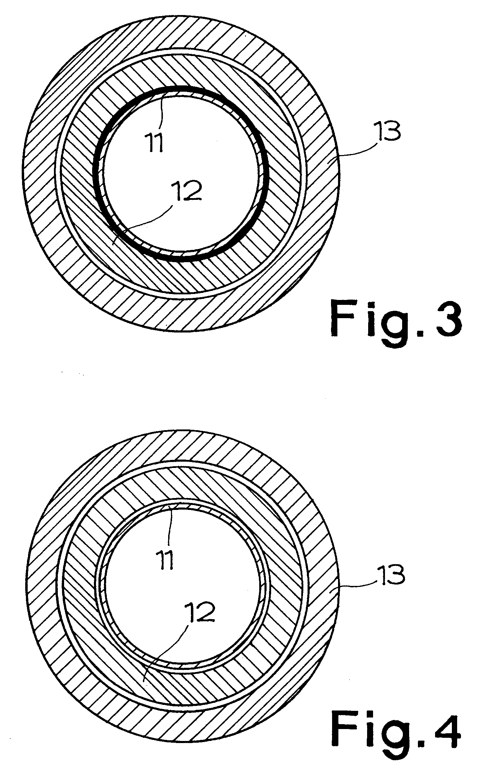

Aus den weiter oben dargelegten Gründen kann es zweckmäßig sein, die Anschluß-Rohrleitungen 11 mit Zug-Vorspannung innerhalb der Verstärkungszylinder 12 anzuordnen. Dabei können die Anschluß-Rohrleitungen 11 durch Hartlöten, vorzugsweise durch Vakuum-Hartlöten und vorzugsweise mit einer Nickel-Legierung mit einer Löttemperatur von ca. 1.000 °C, mit den Verstärkungszylindern 12 verbunden sein. Das ist in Fig. 3 angedeutet.

Weiter oben ist dargelegt worden, daß erfindungsgemäß zur "Immunisierung" der Coriolis-Rohrleitung 1 gegen Temperaturschwankungen für die Coriolis-Rohrleitung 1 und den Kompensationszylinder 6 Werkstoffe mit gleichen oder nahezu gleichen Wärmeausdehnungskoeffizienten gewählt sind, insbesondere Werkstoffe mit relativ geringen Wärmeausdehnungskoeffizienten. Dabei ist es nicht erforderlich, die Anschluß-Rohrleitungen 11 mit den Verstärkungszylindern 12 zu verbinden. Das ist in Fig. 4 angedeutet.

Die beschriebenen Maßnahmen führen dazu, wie bereits ausgeführt, daß die - für die Messung wesentliche - Coriolis-Rohrleitung 1 - mehr oder weniger - "immun" gegen Temperaturschwankungen und gegen von außen einwirkende Kräfte und Momente ist.

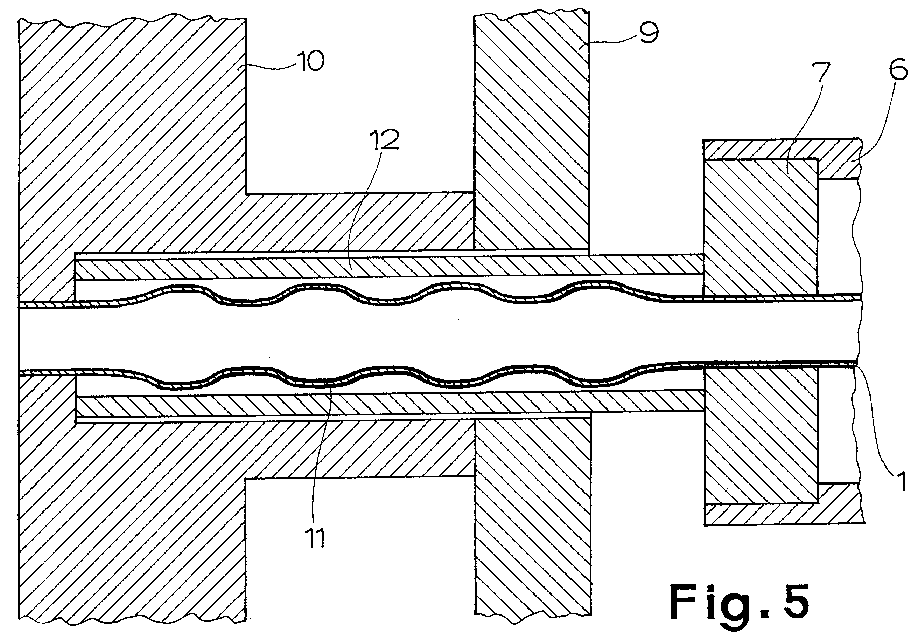

Zuvor sind Maßnahmen in bezug auf die Anschluß-Rohrleitungen 11 beschrieben worden. Hier bietet sich eine weitere, in Fig. 5 dargestellte Ausgestaltungsmöglichkeit an, nämlich in der Art, daß die Anschluß-Rohrleitungen 11 gewellt ausgeführt sind. Dadurch ist sichergestellt, daß die Baueinheit aus der Coriolis-Rohrleitung 1, dem Kompensationszylinder 6 und den Verbindungsringen 7 sich innerhalb bestimmter Grenzen thermisch bedingt ausdehnen kann, ohne daß insgesamt unzulässig hohe Spannungen auftreten.

Die Fig. 6, 7 und 8 zeigen Ausführungsbeispiele erfindungsgemäßer Massendurchflußmeßgeräte, bei denen auf andere Weise als zuvor in Verbindung mit Fig. 5 beschrieben thermisch bedingte Ausdehnungen der Baueinheit aus der Coriolis-Rohrleitung 1, dem Kompensationszylinder 6 und den Verbindungsringen 7 nicht zu unzulässig hohen Spannungen führen.

Im in Fig. 6 nur angedeuteten Ausführungsbeispiel sind die Anschluß-Rohrleitungen 11 innerhalb der Verstärkungszylinder 12 und der Anschlußflansche 10 axial beweglich. Dabei ist den der Coriolis-Rohrleitung 1 fernen Enden der Anschluß-Rohrleitungen 11 jeweils eine Dichtung 13 zugeordnet. Als Dichtungen können O-Ringe vorgesehen sein. Für das in Fig. 6 dargestellte Ausführungsbeispiel gilt jedoch, daß die Dichtungen 13 halbkreisförmig ausgeführt sind, aus Polytetrafluoräthylen bestehen und durch eine - nicht dargestellte - Feder aus rostfreiem Stahl beaufschlagt sind.

Im Ausführungsbeispiel nach Fig. 7 sind die Anschluß-Rohrleitungen 11 gekrümmt, nämlich S-förmig ausgeführt, während im Ausführungsbeispiel nach Fig. 8 die Enden 14 der Coriolis-Leitung 1 gekrümmt, nämlich viertelkreisbogenförmig ausgeführt sind, wobei die Anschluß-Rohrleitungen 11 ebenfalls viertelkreisbogenförmig ausgeführt sind. Nur in Fig. 7 ist dargestellt, daß die gekrümmt ausgeführten Anschluß-Rohrleitungen 11 einen größeren Durchmesser als die Coriolis-Rohrleitung 1 aufweisen. Damit wird der durch die Krümmungen verursachte Druckabfall verringert oder gar eliminiert.

## Patentansprüche

1. Massendurchflußmeßgerät für strömende Medien, das nach dem Coriolis-Prinzip arbeitet, mit mindestens einer das strömende Medium führenden, zumindest im wesentlichen geraden Coriolis-Rohrleitung, mit mindestens einem auf die Coriolis-Rohrleitung einwirkenden Schwingungserzeuger, mit mindestens einem Coriolis-Kräfte und/oder auf Coriolis-Kräften beruhende Coriolis-Schwingungen erfassender Meßwertaufnehmer und mit einem Kompensationszylinder, wobei die Coriolis-Rohrleitung innerhalb des Kompensationszylinders angeordnet ist und die Coriolis-Rohrleitung und der Kompensationszylinder in einer axiale Relativbewegungen ausschließenden Weise miteinander verbunden sind, **dadurch gekennzeichnet,** daß die Coriolis-Rohrleitung (1) und der Kompensationszylinder (6) aus Werkstoffen mit gleichen oder nahezu gleichen Wärmeausdehnungskoeffizienten bestehen.

2. Massendurchflußmeßgerät nach Anspruch 1, dadurch gekennzeichnet, daß die Coriolis-Rohrleitung (1) und der Kompensationszylinder (6) aus Werkstoffen mit relativ geringem Wärmeausdehnungskoeffizienten bestehen.

3. Massendurchflußmeßgerät nach Anspruch 2, dadurch gekennzeichnet, daß die Coriolis-Rohrleitung (1) aus Titan oder aus einer Titanlegierung besteht.

4. Massendurchflußmeßgerät nach Anspruch 2 oder 3, dadurch gekennzeichnet, daß der Kompensationszylinder (6) aus unlegiertem Stahl, aus ferritischem rostfreiem Stahl oder aus einer Nickel-Legierung besteht.

5. Massendurchflußmeßgerät nach einem der Ansprüche 1 bis 4, dadurch gekennzeichnet, daß ein äußerer, vorzugsweise aus rostfreiem Stahl bestehender Aufnahmezylinder (8) vorgesehen und die Baueinheit aus der Coriolis-Rohrleitung (1), dem Kompensationszylinder (6) und den Verbindungsringen (7) innerhalb des Aufnahmezylinders (8) angeordnet ist.

6. Massendurchflußmeßgerät nach Anspruch 5, dadurch gekennzeichnet, daß der Aufnahmezylinder (8) zwei endseitig angeschlossene, vorzugsweise aus rostfreiem Stahl bestehende Verbindungsringe (9) aufweist, an die Verbindungsringe (9) jeweils ein nach außen ragender Anschlußflansch (10) angeschlossen ist und mit der Coriolis-Rohrleitung (1) verbundene Anschluß-Rohrleitungen (11) durch die Verbindungsringe (9) in die Anschlußflanschen (10) ragen.

7. Massendurchflußmeßgerät nach Anspruch 6, dadurch gekennzeichnet, daß die Coriolis-Rohrleitung (1) und die Anschluß-Rohrleitung (11) einstückig ausgeführt sind.

8. Massendurchflußmeßgerät nach Anspruch 7, dadurch gekennzeichnet, daß die Anschlußrohrleitungen (11) jeweils von einem vorzugsweise aus Nylo 36 bestehenden Verstärkungszylinder (1) ummantelt sind.

9. Massendurchflußmeßgerät nach Anspruch 8, dadurch gekennzeichnet, daß die Anschluß-Rohrleitungen (11) mit Zug-Vorspannung innerhalb der Verstärkungszylinder (1) angeordnet sind.

10. Massendurchflußmeßgerät nach Anspruch 9, dadurch gekennzeichnet, daß die Anschluß-Rohrleitungen (11) durch Hartlöten, vorzugsweise durch Vakuum-Hartlöten und vorzugsweise mit einer Nickel-Legierung mit einer Löttemperatur von ca. 1.000 °C, mit den Verstärkungszylindern (12) verbunden sind.

11. Massendurchflußmeßgerät nach einem der Ansprüche 6 bis 8, dadurch gekennzeichnet, daß die Anschluß-Rohrleitungen (11) gewellt ausgeführt sind.

12. Massendurchflußmeßgerät nach Anspruch 8, dadurch gekennzeichnet, daß die Anschluß-Rohrleitungen (11) innerhalb der Verstärkungszylinder (12) und der Anschlußflansche (10) axial beweglich sind.

13. Massendurchflußmeßgerät nach Anspruch 12, dadurch gekennzeichnet, daß den der Coriolis-Rohrleitung (1) fernen Enden der Anschluß-Rohrleitung (11) jeweils eine Dichtung (12) zugeordnet ist.

14. Massendurchflußmeßgerät nach Anspruch 13, dadurch gekennzeichnet, daß als Dichtung O-Ringe vorgesehen sind.

15. Massendurchflußmeßgerät nach Anspruch 13, dadurch gekennzeichnet, daß die Dichtungen (13) halbkreisförmig ausgeführt sind, aus Polytetrafluoräthylen bestehen und durch eine Feder aus rostfreiem Stahl beaufschlagt sind.

16. Massendurchflußmeßgerät nach einem der Ansprüche 1 bis 7, dadurch gekennzeichnet, daß die Anschluß-Rohrleitungen (11) gekrümmt, vorzugsweise S-förmig ausgeführt sind.

17. Massendurchflußmeßgerät nach Anspruch 16, dadurch gekennzeichnet, daß die Enden (14) der Coriolis-Leitung (1) gekrümmt, vorzugsweise viertelkreisbogenförmig ausgeführt ist.

18. Massendurchflußmeßgerät nach Anspruch 16 oder 17, dadurch gekennzeichnet, daß die gekrümmt ausgeführten Anschluß-Rohrleitungen (11) und ggf. die gekrümmt ausgeführten Enden der Coriolis-Rohrleitung einen größeren Durchmesser als die Coriolis-Rohrleitung (1) aufweisen.
